Europäisches Patentamt

European Patent Office

Office européen des brevets

(19)

(11) **EP 1 167 917 A1**

(12) **DEMANDE DE BREVET EUROPEEN**

(43) Date de publication:
**02.01.2002 Bulletin 2002/01**

(51) Int Cl.⁷: **G01B 7/06**

(21) Numéro de dépôt: **01401719.8**

(22) Date de dépôt: **28.06.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **29.06.2000 FR 0008368**

(71) Demandeurs:
- **SNECMA MOTEURS**
  **75015 Paris (FR)**
- **CENTRE NATIONAL DE LA RECHERCHE SCIENTIFIQUE (CNRS)**
  **75016 Paris (FR)**

(72) Inventeurs:
- **Panizzoli, Franck Paul Dominique**
  **77300 Fontainebleau (FR)**
- **Placko, Dominique Marc Bruno**
  **94000 Creteil (FR)**
- **Santander-Rojas, Eduardo Agapito**
  **06200 Nice (FR)**
- **Le Bihan, Yann**
  **92240 Malakoff (FR)**
- **Lespinet, Olivier**
  **91100 Corebil Essonnes (FR)**
- **Mourenko, Alain**
  **95310 Saint-Ouen l'Aumone (FR)**

(54) **Procédé de mesure d'épaisseur de paroi d'une aube creuse**

(57) Un détecteur de courant de Foucault (4) comprend deux pôles alignés dans la direction d'extension de cloison (3) situés derrière une paroi (2) dont l'épaisseur doit être mesurée mais qui perturbe les mesures. L'influence des cloisons (3) est réduite si le noyau (6) du détecteur (4) comprend deux pôles alignés dans la direction d'extension des cloisons (3) et si un système logique est utilisé pour corriger les résultats obtenus en fonction de résultats préliminaires sur une surface de référence.

FIG.1

**Description**

Le sujet de cette invention est la mesure d'épaisseur d'une paroi d'une aube creuse.

Une caractéristique de ces pièces est qu'elles sont normalement munies de cloisons internes couvertes par la paroi, afin de raidir l'aube ou de compartimenter le volume interne. Ces cloisons perturbent les mesures puisque leurs contributions au signal de mesure se superposent à celles de la paroi et qu'elles tendent donc à être confondues avec des surépaisseurs. Il existe déjà plusieurs procédés non destructifs susceptibles d'accomplir des mesures d'épaisseur, mais certains, comme la tomographie aux rayons X où un réseau de détecteurs prend des vues successives autour de l'objet à reconnaître, sont trop compliqués d'emploi alors que d'autres, comme les mesures aux infrarouges, sont trop peu précis. Enfin, les mesures aux ultrasons ne conviennent pas pour tous les matériaux, notamment ceux qui sont anisotropes.

Un procédé particulier de mesures d'épaisseur non destructif et exempt de ces défauts a été développé pour donner des indications précises et fiables sur l'épaisseur d'une paroi malgré la présence de cloisons derrière cette paroi, à des emplacements mal connus et qui perturbent les mesures d'épaisseur.

Le procédé repose sur l'emploi d'un détecteur particulier de courants de Foucault, qui est conçu et employé pour que la contribution des cloisons au signal recueilli soit minimisée, et des moyens de traitement sont proposés pour éliminer substantiellement l'influence des cloisons sur la mesure. Plusieurs modes de réalisation particuliers sont possibles, plus ou moins raffinés et qui donnent des résultats précis en conséquence.

Sous sa forme la plus générale, l'invention concerne un procédé de mesure d'épaisseur d'une paroi d'aube creuse susceptible de couvrir des cloisons, caractérisé en ce qu'il consiste à appliquer deux pôles d'un noyau magnétique d'un détecteur de courants de Foucault sur la paroi en alignement parallèle aux cloisons, les pôles (8) étant munies de bobines (7) reliées entre elles en série, à déplacer le détecteur sur la paroi perpendiculairement aux cloisons, à enregistrer un signal produit par le détecteur, et à en déduire l'épaisseur de la paroi d'après des étalonnages préliminaires.

Le document US 4 005 359 A décrit une sonde à courants de Foucault appliquée à estimer l'épaisseur d'un revêtement de peinture ou d'émail sur un substrat conducteur ; elle se compose de deux bobinages disposés en transformateur, c'est-à-dire associés par induction électromagnétique mais non liés électriquement.

Le document US 5 172 059 A montre qu'une bobine induisant des courants de Foucault dans un substrat sous elle est sensible à des variations d'épaisseur de ce substrat.

L'invention sera décrite en détail au moyen des figures suivantes, qui feront mieux apparaître ses caractéristiques, aspects et avantages, dans des modes de réalisation illustratifs :

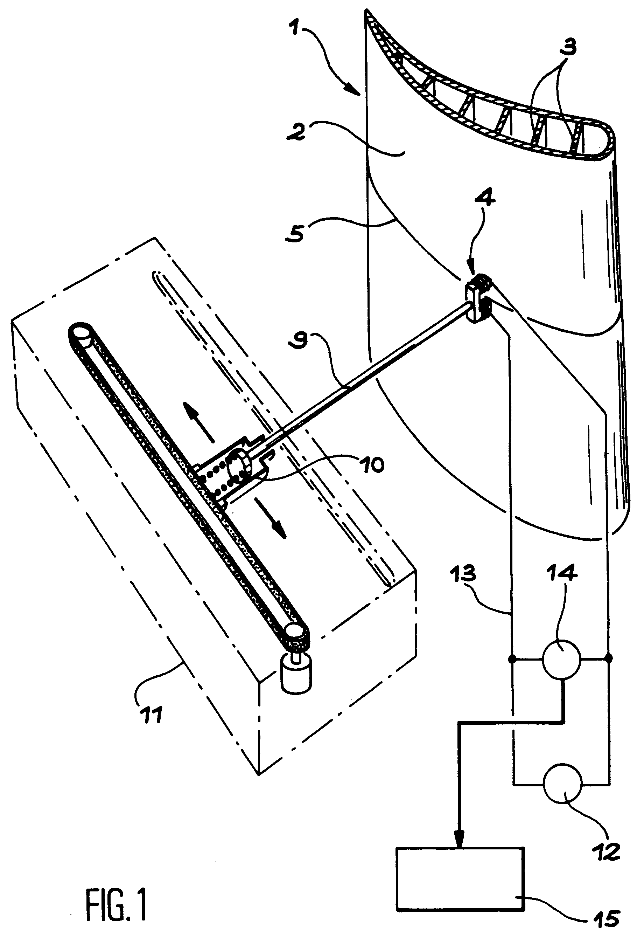

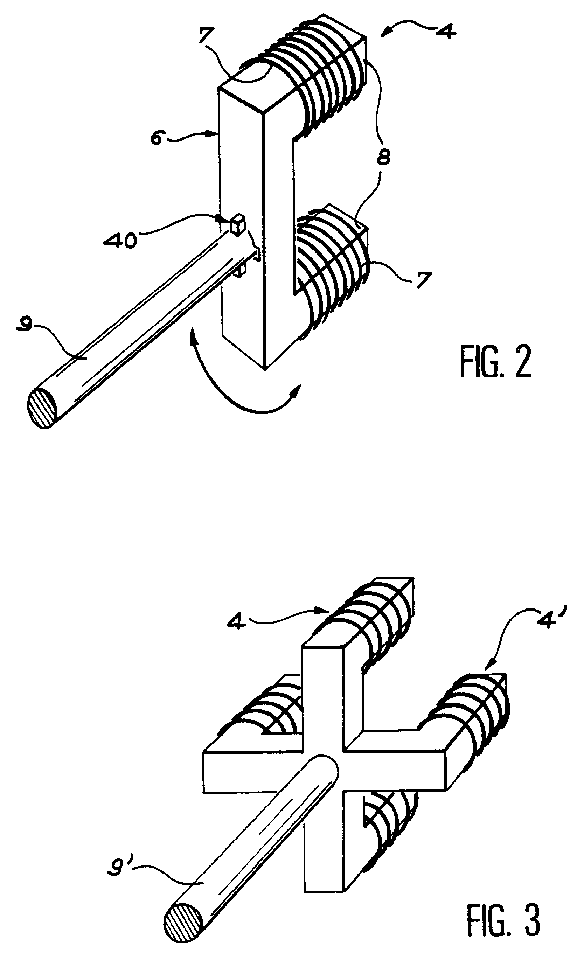

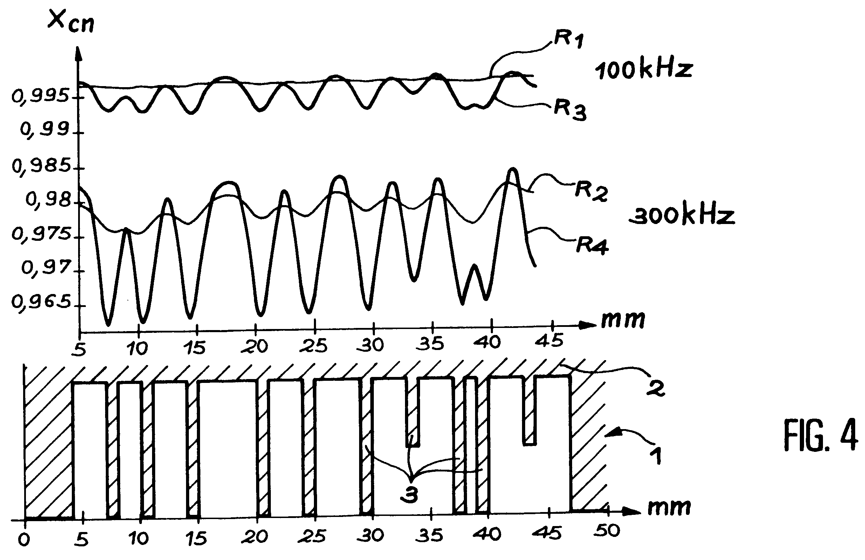

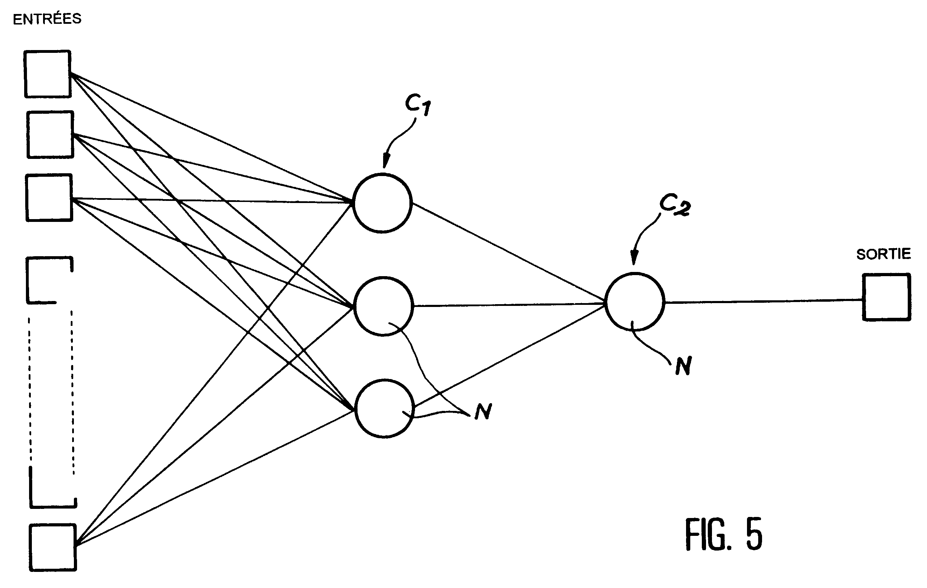

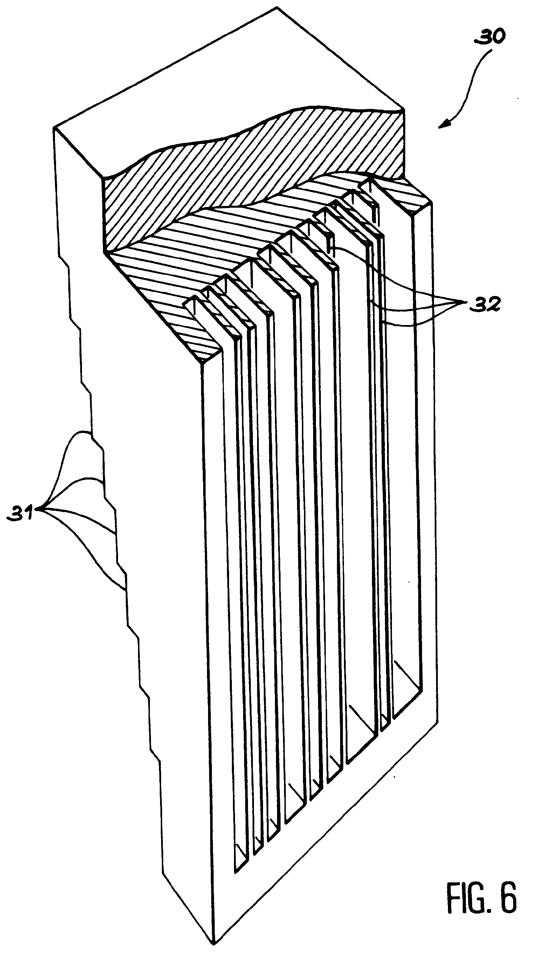

- ■ la figure 1 est une vue générale du procédé ;
- ■ la figure 2 illustre en gros plan le détecteur ;
- ■ la figure 3 est une représentation d'un détecteur composite ;
- ■ la figure 4 est un exemple de signaux obtenus ;
- ■ la figure 5 illustre un réseau de neurones artificiels ;
- ■ et la figure 6 est une vue d'une cale d'étalonnage.

La figure 1 représente partiellement une aube 1 creuse dont le profil est dessiné par une paroi extérieure 2 raidie par des cloisons 3 de largeurs, de profondeurs et d'écartements différents et mal connus. Un capteur 4 est déplacé le long d'une génératrice 5 de l'aube 1. Il comprend un noyau magnétique 6 en arceau, sur lequel est formé un bobinage électromagnétique, ici composé de deux bobines 7 reliées entre elles en série et placées sur les branches 8 de l'arceau 6. Le détecteur 4 est au bout d'un bras de support 9 repoussé par un ressort 10 de manière que les bouts des branches 8 touchent la paroi 2 ; un appareil 11 à moteur permet de déplacer le bras 9 et le détecteur 4 le long de la génératrice 5. Un générateur de courant alternatif 12 est placé sur un circuit électrique 13 auquel les bobines 7 sont branchées en série, et un voltmètre 14 permet d'enregistrer la tension produite aux bornes des bobines 7 et de la transmettre à un moyen de traitement 15 qui constitue un élément important de l'invention. Le signal mesuré par le voltmètre 14 dépend en particulier des courants de Foucault que l'induction électromagnétique des bobines 7 produit sur la portion avoisinante de l'aube 1, et qui dépend, outre de l'épaisseur de la paroi 22, de la présence ou de l'absence d'une cloison 3 devant le détecteur 4 ou à proximité. On a toutefois découvert que, si les pôles du noyau 6, situés au bout des branches 8, étaient alignés dans la direction des cloisons 3, comme on l'a représenté, l'influence des cloisons 3 était beaucoup moins sensible sur la sonde présente, c'est-à-dire que le signal ne variait que faiblement quand le détecteur 4 passait devant une des cloisons 3. La figure 4 donne l'allure de la courbe obtenue (R1 pour une fréquence d'excitation de 100 kHz et R2 pour 300 kHz) pour un profil d'aube 1 figuré en regard.

Si la tension mesurée par le voltmètre 14 est $V_B$ et l'intensité du courant passant par les bobines 7 est I, on peut écrire $Z_0 = \frac{V_0}{I_0} = R_0 + jX_0$ où $Z_0$ est l'impédance, $R_0$ la résistance et $X_0$ la réactance du circuit à l'état à vide (quand l'aube 1 est absente), et $Z_c = \frac{V_c}{I} = R_c + jX_c$ quand le détecteur 4 est appliqué sur l'aube 1 ; j est la constante imaginaire ($j^2 = -1$). Le moyen de traitement peut exploiter les mesures notamment en relevant l'allure de la réactance normalisée $X_{cm} = \frac{X_c}{X_0}$, ce qu'on propose ici, ou éventuellement de la résistance normalisée $\frac{R_c - R_0}{X_0}$. On voit que pour des fréquences d'induction relativement faible, l'influence des cloisons 3 devient presque imperceptible, si bien qu'on peut même concevoir d'ignorer complètement leur existence et de déduire directement l'épaisseur de la paroi 2 d'après le signal capté, après un étalonnage préalable mené sur une série de parois lisses d'épaisseur différente.

Il est toutefois préféré de recourir à des traitements plus compliqués pour déduire l'épaisseur de la paroi 2 du signal obtenu, et le moyen de traitement 15 où ces opérations sont entreprises mérite d'être décrit de façon plus détaillée. Il renferme un réseau de neurones artificiels pouvant prendre la disposition indiquée sur la figure 5. Un neurone artificiel N est en pratique un processeur élémentaire qui reçoit un certain nombre d'entrées e auxquelles sont associés des poids W, et fournit une sortie s qui dépend des entrées pondérées et de biais b, selon la formule $s=F(We+b)$ où F est une fonction d'activation déterminée par la programmation du neurone N. Les données d'entrée circulent dans le réseau en étant modifiées à chaque neurone qu'elles traversent. Les neurones peuvent être répartis en couches successives et enchaînés à tous les neurones de la couche précédente et de la couche suivante. Dans le cas présent, on a constaté qu'un réseau à deux couches, comprenant une couche de sortie $C_2$ à neurone unique fournissant la sortie souhaitée (l'épaisseur) et à couche inférieure ou cachée $C_1$ composée de quelques neurones (deux, trois ou quatre en pratique) alimentés par les valeurs obtenues du signal ($R_1$ ou $R_2$ par exemple) était suffisant. De plus, les fonctions opérées par les neurones sont l'identité ($F(W.e+b)=W.e+b$) dans la couche $C_1$ et la tangente hyperbolique ($F(W.e+b)=\tanh(W.e+b)$) dans la couche $C_2$. Le réseau de neurones subit un apprentissage préalable qui lui permet ensuite d'exprimer les paramètres descriptifs d'une nouvelle situation, ressemblant à la situation d'apprentissage, en fonction des signaux qu'il reçoit. On propose ici de faire un étalonnage au moyen d'une cale plane 30 (figure 6) formée de bandes parallèles 31 d'épaisseur croissante et munie de nervures 32, analogues aux cloisons 3, derrière cette plaque, à des intervalles différents, éventuellement d'épaisseurs et de largeurs différentes et qui coupent toutes les bandes 31. Le détecteur 4 est promené le long de ces bandes 31 de la même façon que pour l'aube 1, afin qu'il fournisse un nombre suffisant de signaux de référence qui sont exploités pour régler le réseau de neurones en ajustant les poids et les biais de ceux-ci. De tels apprentissages du réseau de neurones peuvent être faits automatiquement par des logiciels de façon que le réseau donne en sortie l'épaisseur connue de chaque bande 31 en fonction des signaux captés en parcourant cette bande.

Quoique l'agencement déjà décrit du détecteur 4 soit le préféré, les mesures peuvent être complétées par un détecteur 4' semblable, mais disposé avec les pôles alignés perpendiculairement aux cloisons 3 (figure 3), ce qui donne des lignes d'aimantation perpendiculaires à ces cloisons et des courants de Foucault importants en elles. Il est alors évident que l'influence des cloisons sera beaucoup plus forte sur les mesures qu'avec le détecteur 4, ce qu'on peut vérifier sur les courbes de réponse R3 et R4 de la figure 4. Les signaux du détecteur 4' fournis au réseau de neurones avec ceux du détecteur 4 permettent de corriger l'influence des cloisons et d'obtenir une précision encore meilleure pour l'évaluation de l'épaisseur de la paroi 2, puisque l'influence des cloisons 3 est mieux perçue par le détecteur 4'. Une façon équivalente de procéder aux mesures consisterait, au lieu de prendre simultanément les deux séries de mesures par des détecteurs 4 et 4' montés sur un bras de support 9' se terminant en fourche, à utiliser le seul détecteur 4 à condition de le monter au bras de support 9 par un accouplement 40 permettant la rotation (figure 2). Le procédé serait exactement semblable si ce n'est que les deux catégories de signaux seraient obtenues successivement.

Une autre source de perturbation provient de l'inclinaison du détecteur 4 ou 4', qui reste dans l'alignement du bras de support 9, sur l'aube 3 à cause de sa courbure. Toutefois, une correction peut être entreprise facilement puisqu'on peut vérifier que l'inclinaison n'a d'effet que sur les proportions des parties réelle et imaginaire du signal fourni par le voltmètre 14. Plus précisément, on peut écrire que $Xcn=aRcn+b$, où a est un coefficient qui dépend de l'inclinaison du détecteur 4 sur l'aube 1. Il suffit alors d'appliquer les signaux reçus à un réseau de neurones supplémentaire pour qu'il donne en sortie le signal rectifié, qui est celui qu'on aurait obtenu avec un détecteur 4 ou 4' orienté bien droit sur la paroi 2. Un apprentissage du réseau de neurones supplémentaire est obtenu en promenant le détecteur 4 sur les bandes 31 avec des inclinaisons différentes, pour déterminer des valeurs du coefficient a.

Il faut souligner que d'autres détecteurs de courants de Foucault, tels que des détecteurs axisymétriques à bobine centrale émettant des lignes électromagnétiques dans toutes les directions rayonnantes, ne donneraient que des résultats extrêmement imprécis dans cette application, alors qu'une imprécision d'écart-type proche de 10 µm pour des cloisons de quelques millimètres d'épaisseur peut être espérée avec l'invention.

## Revendications

1. Procédé de mesure d'épaisseur d'une paroi d'aube (2) creuse susceptible de couvrir des cloisons (3), **caractérisé en ce qu'**il consiste à appliquer deux pôles (8) d'un noyau magnétique (6) d'un détecteur (4) de courants de Foucault sur la paroi en alignement parallèle aux cloisons, les pôles (8) étant munies de bobines (7) reliées entre elles en série, à déplacer le détecteur sur la paroi perpendiculairement aux cloisons, à enregistrer un signal produit par le détecteur, et à en déduire l'épaisseur de la paroi d'après des étalonnages préliminaires.

**2.** Procédé de mesure selon la revendication 1, **caractérisé en ce que** les étalonnages préliminaires comprennent des séries de mesures sur des parois de référence (31) d'épaisseurs différentes et couvrant chacune des cloisons (32) séparées par des intervalles différents.

**3.** Procédé de mesure selon la revendication 1 ou 2, **caractérisé en ce qu'**il comprend un apprentissage d'un réseau de neurones (N) au moyen des étalonnages préliminaires, et **en ce que** l'épaisseur de la paroi est obtenue en fournissant le signal produit par le détecteur à une entrée du réseau de neurones.

**4.** Procédé de mesure selon l'une quelconque des revendications 1 à 3, **caractérisé en ce qu'**il consiste encore à appliquer deux pôles d'un noyau magnétique d'un détecteur de courants de Foucault (4') sur la paroi en alignement perpendiculaire aux cloisons, à déplacer le détecteur sur la paroi perpendiculairement aux cloisons, à enregistrer un second signal, produit par le détecteur, et **en ce que** l'épaisseur de la paroi est déduite des étalonnages préliminaires et, à la fois, du premier signal et du deuxième signal.

**5.** Procédé de mesure selon l'une quelconque de revendication 1 à 4, **caractérisé en ce qu'**il comprend une estimation d'inclinaison du détecteur sur la paroi et une correction de traitement de la déduction d'épaisseur en fonction de l'inclinaison.

FIG.1

FIG. 2

FIG. 3

FIG. 4

EP 1 167 917 A1

ENTRÉES

$C_1$

$C_2$

SORTIE

$N$

$N$

FIG. 5

30

32

31

FIG. 6

EP 1 167 917 A1

Office européen
des brevets

**RAPPORT DE RECHERCHE EUROPEENNE**

Numéro de la demande

EP 01 40 1719

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 819 944 A (LUCENT TECHNOLOGIES INC) 21 janvier 1998 (1998-01-21) * colonne 4 - colonne 8 * --- | 1,2 | G01B7/06 |
| Y | US 5 140 264 A (METALA MICHAEL J ET AL) 18 août 1992 (1992-08-18) * colonne 4 - colonne 5 * --- | 1,2 | |
| A | FR 2 712 975 A (FRAMATOME SA) 2 juin 1995 (1995-06-02) * revendication 8 * --- | 1 | |
| A | US 4 005 359 A (SMOOT WILLIAM N) 25 janvier 1977 (1977-01-25) * colonne 5 - colonne 9 * --- | 1,2 | |
| A | US 3 440 527 A (STEINGROEVER ERICH) 22 avril 1969 (1969-04-22) * colonne 2, ligne 40 - ligne 44,58,59 * --- | 1 | |
| A | GB 2 112 944 A (TAYLOR JAMES C) 27 juillet 1983 (1983-07-27) * page 2, colonne 2; revendication 1 * --- | 1,2 | **DOMAINES TECHNIQUES RECHERCHES (Int.Cl.7)** G01B G01N |
| A | GB 2 262 346 A (NIPPON KOKAN KK) 16 juin 1993 (1993-06-16) * page 16 - page 17; figure 7 * ----- | 1-5 | |

Le présent rapport a été établi pour toutes les revendications

| Lieu de la recherche | Date d'achèvement de la recherche | Examinateur |
|---|---|---|
| BERLIN | 24 septembre 2001 | Dietrich, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**EP 1 167 917 A1**

## ANNEXE AU RAPPORT DE RECHERCHE EUROPEENNE
## RELATIF A LA DEMANDE DE BREVET EUROPEEN NO.

EP 01 40 1719

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-09-2001

| Document brevet cité au rapport de recherche | | Date de publication | Membre(s) de la famille de brevet(s) | | Date de publication |
|---|---|---|---|---|---|
| EP 0819944 | A | 21-01-1998 | EP | 0819944 A1 | 21-01-1998 |
| | | | JP | 10073570 A | 17-03-1998 |
| | | | US | 5942893 A | 24-08-1999 |
| US 5140264 | A | 18-08-1992 | CA | 2072029 A1 | 25-12-1992 |
| | | | IT | 1258962 B | 11-03-1996 |
| FR 2712975 | A | 02-06-1995 | FR | 2712975 A1 | 02-06-1995 |
| US 4005359 | A | 25-01-1977 | AUCUN | | |
| US 3440527 | A | 22-04-1969 | DE | 1303674 B | 31-05-1972 |
| GB 2112944 | A | 27-07-1983 | AUCUN | | |
| GB 2262346 | A | 16-06-1993 | JP | 2639264 B2 | 06-08-1997 |
| | | | JP | 5164745 A | 29-06-1993 |

Pour tout renseignement concernant cette annexe : voir Journal Officiel de l'Office européen des brevets, No.12/82

11